# EUROPEAN PATENT APPLICATION

(11) **EP 2 036 633 A1**
(43) Date of publication of application: **18.03.2009**
(21) Application number: 07116448.7
(22) Date of filing: 14.09.2007
(51) Int. Cl.: B21K 1/46, F16B 23/00

(54) **Punch and recessed screw formed thereby**

(71) Applicant: Taiwan Shan Yin Int'l Co., Ltd., Kaohsiung City 806 (TW)
(72) Inventor: Su, Guo-Cai, Kaohsiung City 806 (TW)
(74) Representative: Viering, Jentschura & Partner

(57) **Abstract**

The present invention pertains to a punch (3) for forming recessed screw (4) comprising a punch body (31) and a punch head (32). Particularly, the punch head includes two square portions (321, 322) having different heights (x, y) and square sides (a, b) and intersecting at an included angle (θ), thereby punching the corresponding tiers of recesses (412, 413) in the socket (411) of the screw head (41). In this manner, the screw can be facilely driven by a screwdriver (5, 6) presenting a square configuration or a uniform shape as the punch, which facilitates to reduce the problem of unfitted driving tool and increase the convenience while in operation.

## Description

### BACKGROUND OF THE INVENTION

### 1. Field of the Invention

The present invention relates to a punch and a recessed screw according to the preamble to claim 1. The present invention concerns with a punch including dual tiers of square portions for punching the corresponding tiers of recesses in the screw head, which is conducive to receive a screwdriver presenting a square shape or a configuration as the same as the punch.

### 2. Description of the Related Art

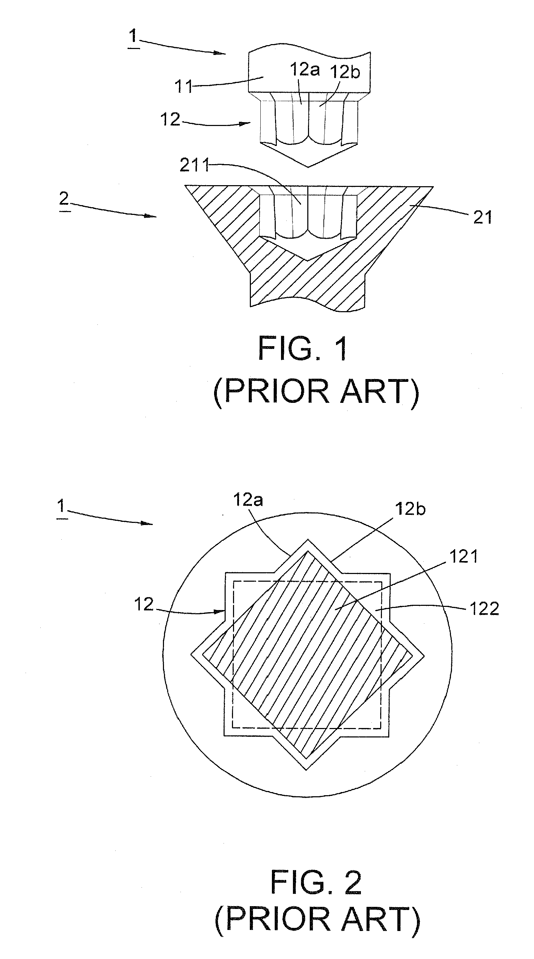

Referring to Fig. **1** and **2****,** a conventional punch **1** of the U. S. Patent No. 3972083 discloses a punch body **11** and a punch head **12** extended from the punch body **11** for punching a recess **211** in a screw head **21** of a screw **2;** wherein, the punch head **12** presents in cross section eight symmetrically corners defined by any of two adjacent wall portions **12a** and **12b,** which intersect at a right angle as shown in Fig. **2****.** Any series of four alternate corners defines a square **121** in solid line and cross hatched, and the remaining series of four alternate corners defines another square **122** in dotted line.

While in punching, the punch shank **12** is set into the recess **211,** which is formed by a single punch blow at room temperature and has a configuration corresponding to the punch **1** for the entrance of a square screwdriver.

From the above, although the recess **211** punched by the punch **1** receives the square screwdriver, there may be some defects. Due to the configuration of the punch head **12,** a single tier of the recess **211** is accordingly formed, which may merely receive a simple square screwdriver, but may not be optimally seated by a square screwdriver with different dimensions. As a result, it may bring the inconvenience for the users while in operation.

### SUMMARY OF THE INVENTION

Therefore, the objects of the present invention are to provide a punch for punching a socket in a screw head, where dual tiers of the recesses are formed in accordance with the configurations of the square portions of the punch, thus improving the problem of unfitted driving tool and increase the convenience while using.

The punch for forming recessed screw related to the present invention comprises a punch body and a punch head; wherein, the punch body has a first square portion and a second square portion being in an included angle relation thereto; the height of the second square portion extended from the punch body exceeds that of the first square portion, and each of the series of square sides of the first square portion is greater than that of the second square portion, so as to form dual tiers of recesses in the socket of the screw head, which facilitates to decrease the problem of unfitted driving tool and increase the convenience in use.

The present invention will become more apparent from the following description when taken in conjunction with the accompanying drawings.

### BRIEF DESCRIPTION OF THE DRAWINGS

- Fig.: 1 is a schematic view showing a conventional punch of U. S. Patent No. 3972083 for forming a socket in a screw head;
- Fig. 2: is a schematic view showing the outline in underside plan of the conventional punch of U.S. Patent No. 3972083;
- Fig. 3: is a perspective view showing a punch and a related recessed screw of the preferred embodiment of the present invention;
- Fig. 4: is a top view showing the formation of the recessed screw punched by the punch of Fig. 3;
- Fig. 5: is a schematic view showing a state of the punching of the preferred embodiment of the present invention that the punch of Fig. 3 punches a socket in the screw head;
- Fig. 6: and 7 are schematic views showing the screwdrivers respectively formed in conformity with the shape of the first square portion and the second square portion of the punch, thereby promoting the screwdriver to accurately fit with the socket of the screw head; and
- Fig. 8: is a schematic view showing a screwdriver formed in conformity with a configuration of the entire punch head of the punch, thereby promoting the screwdriver to accurately fit with the socket of the screw head.

### DETAILED DESCRIPTION OF THE PREFERRED EMBODIMENTS

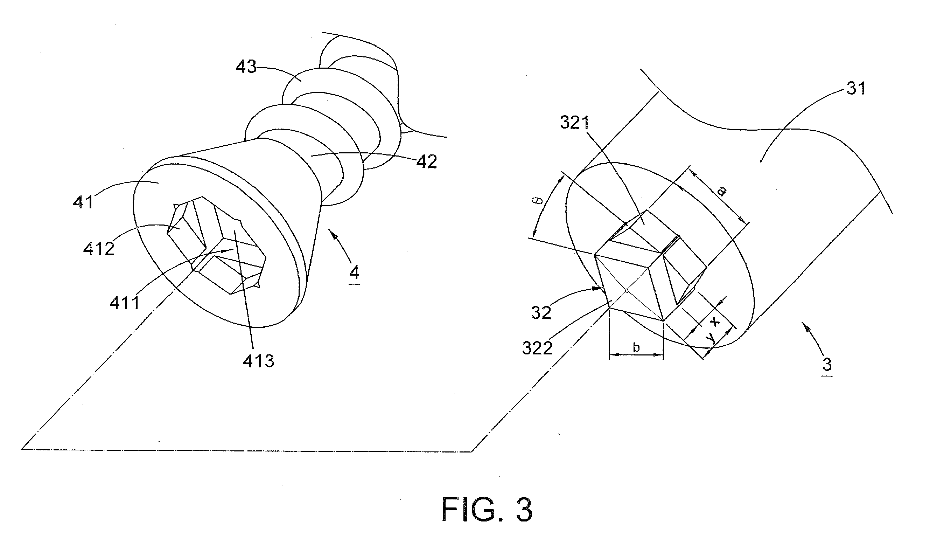

Referring to Fig. **3****,** a punch **3** for forming recessed screw **4** of the preferred embodiment of the present invention comprises a punch body **31** and a punch head **32** longitudinally extended from the punch body **31;** characterized in that the punch body **31** comprises a first square portion **321** and a second square portion **322** disposed on the first square portion **321;** the first square portion **321** is inclined with respect to the second square portion **322** by an included angle "θ", which is in **45** degrees and is adopted in the preferred embodiment of the present invention. Both of the square portions **321** and **322** have heights **"x"** and **"y"** extended from the punch body **31** and have two series of square sides **"a"** and **"b"** defined around the peripheries thereof, respectively. The height "**y**" of the second square portion **322** exceeds the height **"x"** of the first square portion **321;** moreover, each of the series of square sides **"a"** of the first square portion **321** is greater than each of the series of square sides **"b"** of the second square portion **322.**

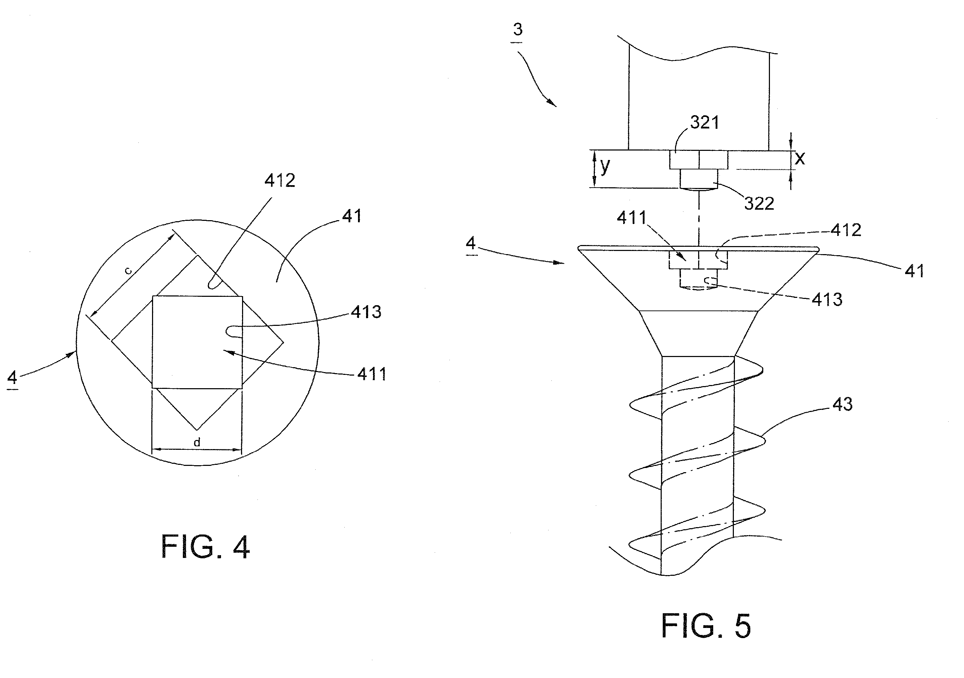

Further referring to Fig. **3** and **4****,** the recessed screw **4** punched by the punch **3** comprises a screw head **41,** a shank **42** longitudinally extended from the screw head **41,** and a plurality of threads **43** built upon an outer circumference of the shank **42;** wherein, a socket **411** is punched in the screw head **41** by the punch **3** for receiving a screwdriver; the socket **411** consists of a first recess **412** and a second recess **413;** further, the first recess **412** and the second recess **413** separately have two series of square sides **"c"** and **"d"** defined around the peripheries thereof, which are in different widths. Since the punch head **32** punches to the screw **4,** the recesses **412** and **413** of the socket **411** are simultaneous formed in dual tiers corresponding to the configurations of the square portions **321** and **322.** Precisely, each of the series of square sides **"c"** of the first recess **412** equals to each of the series of square sides **"a"** of the first square portion **321,** and each of the series of square sides **"d"** of the second recess **413** equals to each of the series of square sides **"b"** of the second square portion **322,**

Still further, referring to Fig. **3** to **5****,** the punch **3** initially punches a socket **411** in the screw head **41** of the screw **4,** and the first recess **412** and the second recess **413** are accordingly formed in the socket **411** in accordance to the configuration of the first square portion **321** and the second square portion **322.** According to the configurations that the first square portion **321** comprises the larger series of square sides **"a"** and the shorter height **"x"** than those of the second square portion **322** and is inclined with respect to the second square portion **322** by the included angle "θ", thus dual tiers of recesses **412** and **413** are accordingly formed in the socket **411** with different series of square sides **"c"** and **"d".** Subsequently, a plurality of threads **43** is formed on the outer circumference of the shank **42,** and further an integral recessed screw **4** is presented in Fig. **3**

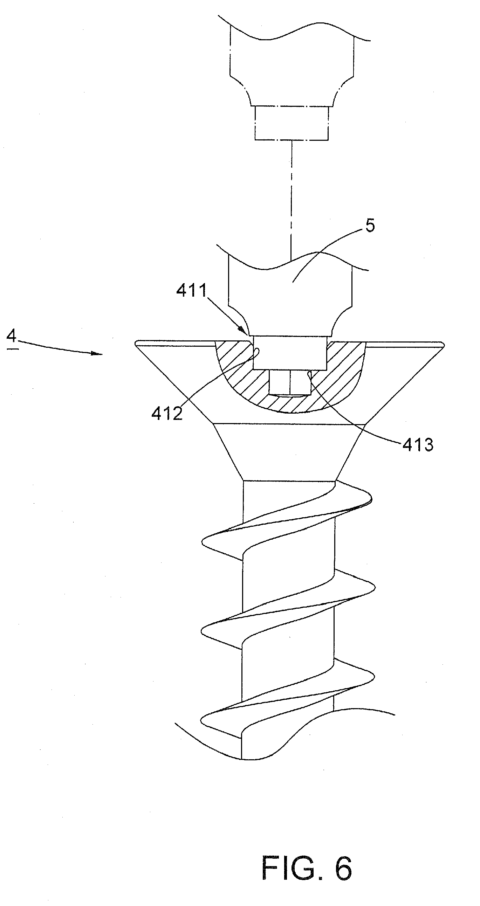

By means of the different dimensions of the recess **412** and **413,** the screwdrivers **5** and **6** with various configurations can fit with the socket **411.** That is, the screwdrivers **5** and **6** as shown in sequence in Fig. **6****,** Fig. **7****,** and Fig. **8** alternatively provide with the shapes corresponding to the shape of the first recess **412,** of the second recess **413,** or of the configuration of the square portions **321** and **322,** so as to accurately fit with the different dimensions of the socket **411** to drive the screw **4.**

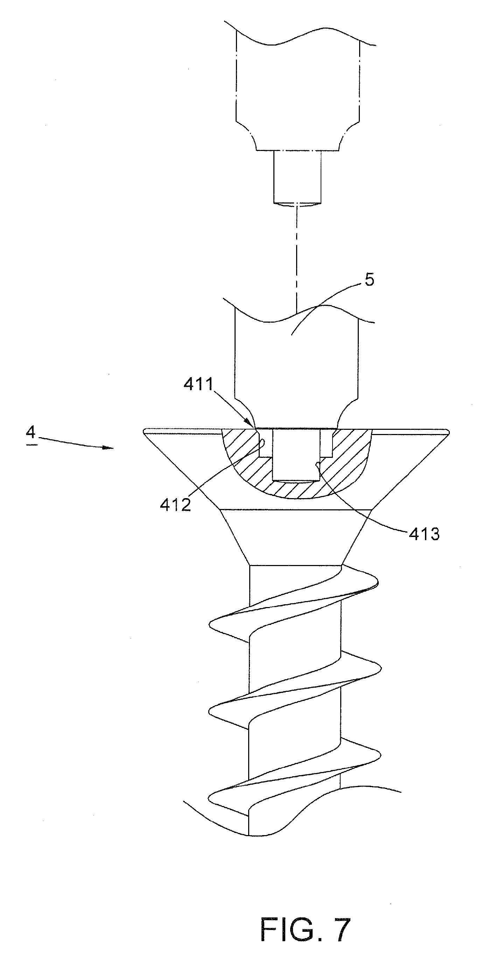

Starting with Fig. **6****,** the screwdriver **5** is initially arranged as a square shape in conformity of the shape of the first recess **412,** which results in the screwdriver **5** to be facilely and accurately drive into the first recess **412** of the socket **411.** Similarly, the screwdriver **5** as illustrated in Fig. **7** presents a square shape in conformity of the shape of the second recess **413,** thus improving the problem of the inadequate screwdriver **5** and increase the convenience while screwing.

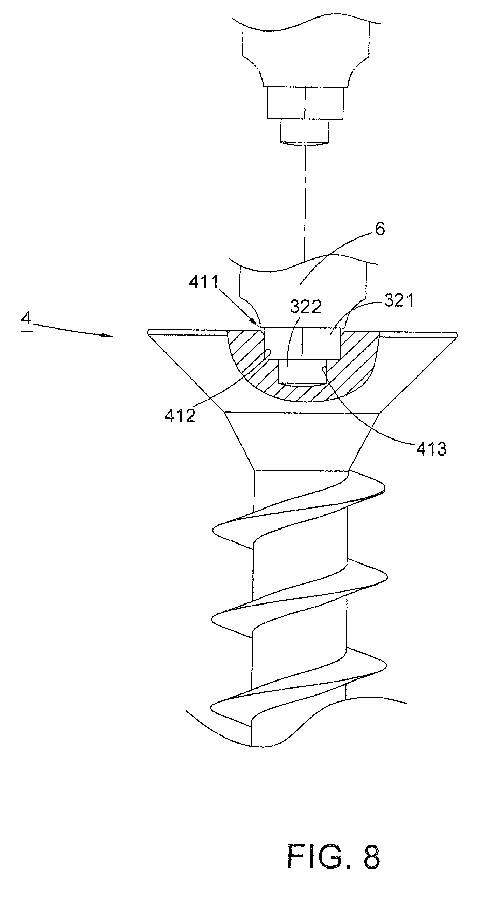

Further referring to Fig. **8****,** the screwdriver **6** comprises a uniform shape as the configurations of the first square portions **321** and the second square portion **322,** and the screwdriver **6** thus entirely and accurately fits with the socket **411,** which facilitates to transfer a force on the screw **4** and prevent the screwdriver **6** from being facilely out of the socket **411** while driving the screw **4.**

To sum up, the present invention notably takes advantage of the square portions of the punch for punching a socket in the screw head, which results in forming dual tiers of the recess with different dimensions therein. Thus, the recessed screw receives a screwdriver presenting a square shape or a configuration as the same as the punch head, thereby reducing the problem of unfitted driving tool and increasing the convenience of the operation.

## Claims

1. A punch (3) for forming recessed screw (4) comprising:
a punch body (31); and
a punch head (32) longitudinally extended from said punch body (31) ;
wherein, said punch body (31) comprising a first square portion (321) and a second square portion (322) disposed on said first square portion (321), said first square portion (321) being inclined with respect to said second square portion (322) by an included angle (θ); said first and said second square portion(321, 322) having heights (x, y) extended from the punch body (31) and having two series of square sides (a, b) defined around peripheries thereof, respectively; said height (y) of said second square portion (322) exceeding said height (x) of said first square portion (321); each of said series of square sides (a) of said first square portion (321) being greater than each of said series of square sides (b) of said second square portion (322).

2. A recessed screw (4) punched by said punch of Claim 1 comprising:
a screw head (41);
a shank (42) longitudinally extended from said screw head (41) ; and
a plurality of threads (43) built on an outer circumference of said shank (42);
wherein, a socket (411) being punched by said punch (3) of Claim 1 and defined in said screw head (41); said socket (411) consisting of a first recess (412) and a second recess (413), which are shaped corresponding to the configurations of said first square portion (321) and said second square portion (322).

3. The punch (3) for forming recessed screw (4) as claimed in claim 1, wherein said included angle (θ) is in 45 degrees.
